# EUROPÄISCHE PATENTSCHRIFT

(11) **EP 1 060 926 B1**
(45) Veröffentlichungstag und Bekanntmachung des Hinweises auf die Patenterteilung: **07.06.2006**
(21) Anmeldenummer: 00112526.9
(22) Anmeldetag: 13.06.2000
(51) Int. Cl.: B60J 7/185

(54) **Verschlussvorrichtung**
Locking device
Dispositif de fermeture

(30) Priorität: 15.06.1999 DE 19927236
(43) Veröffentlichungstag der Anmeldung: 20.12.2000
(73) Patentinhaber: Webasto Vehicle Systems International GmbH, 82131 Stockdorf (DE)
(72) Erfinder: Wienchol, Otto, 82069 Hohenschäftlarn (DE)
(74) Vertreter: Wiese, Gerhard

(56) Entgegenhaltungen:
- DE-A- 1 505 721
- DE-A- 3 942 746
- DE-A- 19 634 898
- US-A- 5 284 378

## Beschreibung

Die Erfindung bezieht sich auf eine Verschlussvorrichtung zur lösbaren Festlegung eines Dachteils eines Fahrzeugs an einem karosseriefesten Gegenlager, wobei die Verschlussvorrichtung einen in eine Freigabestellung bringbaren Verriegelungshaken zum Verriegeln des Gegenlagers wenigstens in einer vorderen und einer hinteren Rastposition des Verriegelungshakens sowie einen Sensor umfasst, mittels dem eine von einer Hilfskraft-Betätigungsvorrichtung bewirkbare Zuziehbewegung des Verriegelungshakens in Richtung auf seine hintere Rastposition aktivierbar ist.

Eine derartige Verschlussvorrichtung ist in der DE 41 11 646 C2 als Schlossfalle zur Verriegelung des vordersten Querspriegels eines Cabrio-Faltverdecks an einem über der vorderen Windschutzscheibe angeordneten Windlaufelement offenbart, wobei in kinematischer Umkehr ein Schließbolzen als Gegenlager nicht karosseriefest vorgesehen ist, sondern vom vordersten Querspriegel nach unten vorsteht. Ein schwenkbar gelagerter Fanghaken wird von einem Hydraulikzylinder betätigt und verschwenkt seinerseits über eine Mitnahmeverbindung eine koaxial gelagerte Gabelfalle mit einer U-förmigen Nut, in die der vom vordersten Querspriegel nach unten vorstehende Schließbolzen aufnehmbar ist. Ein die Lage des Schließbolzens erfassender Sensor leitet in einer Offen- oder Freigabestellung der Teile der Schlossfalle einen automatischen Verriegelungsvorgang ein, bei dem der Hydraulikzylinder aktiviert wird und mittels der Mitnahmeverbindung des Fanghakens die Gabelfalle zunächst in eine durch einer Vorrastklinke arretierbare Vorraststellung und dann in eine Hauptraststellung verschwenkt, in welcher die Gabelfalle von einer Hauptrastklinke gehalten wird. Bei dieser bekannten Verschlussvorrichtung ist es konstruktiv nicht möglich, den Querspriegel, ausgehend von der Vorraststellung der Gabelfalle, ohne weitere Verlagerung in Öffnungsrichtung freizugeben. Ferner ist der Querspriegel beim Beginn des automatischen Verriegelungsvorgangs noch nicht in der Nut der Gabelfalle arretiert.

Eine weitere bekannte Verschlussvorrichtung (DE 297 03 603 U1) dient der lösbaren Festlegung eines Cabriolet-Verdecks an einem Karosserierahmenteil. Die Verschlussvorrichtung umfasst einen um eine im wesentlichen horizontal und parallel zur Fahrzeuglängsachse verlaufenden Achse schwenkbaren Fanghaken, welcher mit einem Gegenlager zusammenwirkt. Beim Verschwenken des Fanghakens greift eine Nut desselben in einen U-förmige Schenkel des Gegenlagers, zieht diesen im wesentlichen in Schwenkrichtung in ein trichterförmiges Aufnahmeorgan und verriegelt ihn in einer Endlage. Dabei wird die Schwenkbewegung des Fanghakens von einem Betätigungselement betätigt, welches seinerseits von einem Antriebsorgan in Form eines Elektromotors oder eines Hydraulikzylinders bewegt wird. Es können Schalter vorgesehen sein, die je nach Schwenkstellung des Fanghakens bzw. Horizontalweg des Betätigungselements betätigt werden und Steuersignale an das Antriebsorgan abgeben, um ein automatisches Öffnen und Schließen des Cabriolet-Verdecks zu ermöglichen.

Aus der DE 196 34 898 A1 ist eine Vorrichtung zum Verschließen und Zuziehen sowie zum Öffnen einer Heckraumklappe einer Kraftfahrzeugkarosserie bekannt, die ein Heckklappenschloss im Bereich einer der Heckraumklappe zugeordneten Ladekante und ein an der Heckklappe angeordnetes Schließelement als Gegenlager umfasst. Das Heckklappenschloss weist ein Schlossblech, eine vorrastfreie Drehfalle, eine mit einem Öffnungshebel freigebbare Sperrklinke zur Arretierung der Drehfalle sowie eine Zuziehschwinge mit elektromechanischem Zuziehantrieb auf. Es sind ferner zwei Endlagenschalter vorgesehen, von denen ein erster von der Zuziehschwinge in deren Zuziehstellung und ein zweiter von der in Ausraststellung befindlichen Sperrklinke betätigt wird. Beim Schließen der Heckraumklappe wird das Schließelement in eine U-förmige Nut der Drehfalle eingeführt und unter Verschwenken der Drehfalle und der Zuziehschwinge in ein nach oben offenes Einführungsmaul des Heckklappenschlosses bewegt, wobei die Drehfalle und die Zuziehschwinge auf dem Schlossblech achsgleich gelagert sind.

In der EP 0 492 006 A1 ist eine Vorrichtung zum Niederholen eines freien Endes eines Fahrzeugverdecks auf einen Rahmen eines Fahrzeugs aus einer Stellung, in der sich das Fahrzeugverdeck kurz vor der geschlossenen Stellung und das freie Ende oberhalb dieser befindet, und zum Halten des vorderen Endes des Fahrzeugverdecks in niedergeholter Stellung beschrieben. Die Vorrichtung hat am freien Ende des Fahrzeugverdecks mindestens ein Eingriffselement als Gegenlager für den Eingriff eines am Rahmen vorgesehenen Niederholhakens, der eine Angriffskurve zum geleitenden Eingriff mit dem Eingriffselement aufweist und der mit einer Betätigungsstange einer Antriebseinrichtung über einen in Eingriff mit einem länglichen Aufnahmeschlitz stehenden Schwenkzapfen schwenkbar gekoppelt und von der Antriebseinrichtung zwischen einer angehobenen Eingriffsstellung und einer abgesenkten Verriegelungsstellung bewegbar ist. Der Aufnahmeschlitz für den Schwenkzapfen ist am Rahmen ausgebildet. Der Niederholhaken seinerseits weist einen länglichen Führungsschlitz auf, mit dem ein am Rahmen befestigter Führungszapfen in Eingriff steht, um den der Niederholhaken bei Bewegung in die Verriegelungsstellung unter Verlagerung des Führungszapfens entlang dem Führungsschlitz schwenkbar ist, wobei der Niederholhaken zunächst im wesentlichen eine Schwenkbewegung in Bewegungsrichtung des Eingriffselements ausführt, der kurz vor Erreichen der Verriegelungsstellung eine Verschiebebewegung im wesentlichen senkrecht zur Bewegungsrichtung des Eingriffselements überlagert ist.

Die in der DE-AS-15 05 721 beschriebene Vorrichtung zur Verriegelung eines Kraftfahrzeug-Klappverdecks in geschlossener Stellung an einem festen Teil eines Dachs des Kraftfahrzeugs umfasst eine Hilfskraft-Betätigungsvorrichtung und ein in einer Versenkung des festen Dachteils angebrachtes Verriegelungsglied, das in eine Bereitschaftsstellung zum Erfassen eines am Verdeck angebrachten Gegenglieds durch Betätigung einer der Hilfskraft-Betätigungsvorrichtung zugeordneten Steuervorrichtung angebracht wird. Die Steuervorrichtung arbeitet in Abhängigkeit von der Stellung des Verdecks, wobei ein am Verdeck fest angebrachter Auslösestift knapp vor Erreichen der geschlossenen Endlage des Verdecks einen zu der Betätigungsvorrichtung gehörenden Hilskraftschalter betätigt, der die Betätigungsvorrichtung so beaufschlagt, dass das Verriegelungsglied das am Verdeck angebrachte Gegenglied erfasst, das Verdeck in die geschlossene Endlage zieht und dort festhält. Eine Arretierung des Gegenglieds durch das Verriegelungsglied ist lediglich in der geschlossenen Endlage möglich.

Eine gattungsgemäße Verschlussvorrichtung ist aus dem DE 39 42 746 A bekannt.

Der im Anspruch 1 angegebenen Erfindung liegt die Aufgabe zugrunde, eine Verschlussvorrichtung der eingangs genannten Art zu schaffen, die es erlaubt, das Dachteil auf komfortable Weise und mit hoher Betriebssicherheit am Gegenlager festzulegen.

Diese Aufgabe wird bei einer Verschlussvorrichtung mit den Merkmalen des Oberbegriffs des Anspruchs 1 dadurch gelöst, dass der Verriegelungshaken in seiner vorderen Rastposition von der Freigabestellung in eine Verriegelungsstellung bringbar ist, wobei der Sensor in der vorderen Rastposition des Verriegelungshakens bei verriegeltem Gegenlager betätigbar ist und an ihm ein Aktivierungssignal anliegt, welches in Signalverbindung mit einer Steuerung steht, die ihrerseits die Zuziehbewegung des nach Anliegen des Aktivierungssignals auslöst.

Dadurch wird beim Ankoppeln der Verriegelungsvorrichtung am Gegenlager letzteres bereits beim Erreichen der vorderen Rastposition sicher und mit hoher Haltekraft in der Verschlussvorrichtung arretiert, wobei die vordere Rastposition so gewählt werden kann, dass zwischen dem Dachteil und karosseriefesten Strukturen vorhandene Dichtungen und dergleichen nur geringfügig vorgespannt werden müssen und folglich der Ankopplungsvorgang nur geringe Kräfte erfordert. Sobald das Gegenlager in der Verschlussvorrichtung arretiert ist, wird der Sensors betätigt und mittels der Steuerung eine automatische Zuziehbewegung ausgelöst.

Optional kann die Zuziehbewegung nach Ablauf einer an der Steuerung einstellbaren Totzeit erfolgen; diese ist prinzipiell beliebig wählbar und liegt vorzugsweise im Bereich von etwa 0,2 bis 5,0 Sekunden, besonders bevorzugt im Bereich von etwa 0,5 bis 1,5 Sekunden.

Bei der Wahl der Hilfskraft-Betätigungsvorrichtung ist man ebenfalls im Prinzip frei, und diese kann beispielsweise einen Elektromotor oder eine Hydraulikzylindereinheit umfassen.

Vorteilhafte Weiterbildungen der Erfindung sind Gegenstand der Unteransprüche.

Um eine eindeutige geometrische Zuordnung zwischen dem Gegenlager und der Verschlussvorrichtung zu erhalten, kann die Verschlussvorrichtung eine Lagerplatte mit einem Aufnahmeorgan für das Gegenlager umfassen, wobei das Gegenlager mit Bezug auf das Aufnahmeorgan verriegelbar und im wesentlichen linear verschiebbar ist. Dabei ist es besonders vorteilhaft, wenn der Verriegelungshaken, mittels dem die Verriegelung und Verschiebung des Gegenlagers mit Bezug auf das Aufnahmeorgan erfolgt, im wesentlichen in Verschieberichtung des Gegenlagers zwischen der vorderen und der hinteren Rastposition verschiebbar sowie im wesentlichen senkrecht hierzu zwischen der Verriegelungs- und der Freigabestellung schwenkbar ist. Auf diese Weise wird die Zuziehbewegung des Verriegelungshakens als im wesentlichen lineare Verschiebewegung ausgeführt und eine Funktionstrennung zwischen dieser Verschiebebewegung und einer Verriegelungsbewegung als Schwenkbewegung geschaffen, mittels der das Gegenlager vom Verriegelungshaken im Aufnahmeorgan der Verschlussvorrichtung verriegelt wird. Indem der Verriegelungshaken im wesentlichen senkrecht zur Richtung der Verschiebebewegung, die das Gegenlager relativ zum Aufnahmeorgan ausführt, geschwenkt wird, lässt sich eine Selbsthemmungswirkung erzielen, so dass der Verriegelungshaken durch vom Gegenlager in Verschieberichtung aufgebrachte Kräfte nicht in seine Freigabestellung geschwenkt wird.

Die Betätigung des Sensors kann durch Wechselwirkung desselben mit dem in seiner vorderen Rastposition in Verriegelungsstellung befindlichen Verriegelungshaken erfolgen. Auf konstruktiv einfache Weise ist dies realisierbar, wenn dazu der schwenkbare Verriegelungshaken über seinen Drehpunkt hinaus verlängert ist und einen hinteren Arm aufweist, der die Betätigung des Sensors bewirkt.

Der Sensor ist prinzipiell sowohl mittelbar über mechanische Zwischenglieder als auch unmittelbar vom Verriegelungshaken betätigbar. Im Fall der mittelbaren Betätigung über Zwischenglieder kann eine Feder eingesetzt werden, wobei der hintere Arm des Verriegelungshakens den Sensor mittelbar über einen Federarm der Feder betätigt und der Sensor und die Feder an der Lagerplatte festgelegt sind.

Alternativ zur Betätigung des Sensors durch Wechselwirkung des Sensors mit dem Verriegelungshaken, sofern sich dieser in seiner vorderen Rastposition in Verriegelungsstellung befindet, kann die Betätigung des Sensors auch durch Wechselwirkung mit dem Gegenlager erfolgen, welches in der Verschlussvorrichtung bei in vorderer Rastposition befindlichem Verriegelungshaken von diesem verriegelt ist. Dabei kommt die erste Alternative bevorzugt zur Anwendung, wenn der Verriegelungshaken in der vorderen Rastposition in seiner Freigabestellung arretierbar ist, wobei die Arretierung mittels des Gegenlagers lösbar ist, wenn sich dieses in vorbestimmter Position innerhalb des Aufnahmeorgans der Verschlussvorrichtung befindet. Der Verriegelungshaken kann dann beispielsweise durch Federvorspannung in seine Verriegelungsstellung schwenken. Demgegenüber ist es von Vorteil, den Sensor durch Wechselwirkung mit dem Gegenlager zu betätigen, wenn sich der Verriegelungshaken in der vorderen Rastposition federnd vorgespannt in seiner Verriegelungsstellung befindet und so ausgebildet ist, dass er beim Ankoppeln der Verschlussvorrichung an das Gegenlager mittels des Gegenlagers in die Freigabestellung bringbar ist und wieder in die Verriegelungsstellung zurückschwenkt, wenn sich das Gegenlager in einer vorbestimmten Position im Aufnahmeorgan befindet, in welcher das Gegenlager vom Verriegelungshaken verriegelbar ist.

In weiterer Ausgestaltung der Erfindung ist der Sensor als mechanisch betätigbarer taktiler Sensor, insbesondere als Mikroschalter ausgebildet. Alternativ kann ein berührungslos arbeitender Näherungssensor zum Einsatz kommen, beispielsweise ein induktiver Sensor.

Unabhängig vom Sensortyp ist es steuerungstechnisch vorteilhaft, wenn der Sensor im wesentlichen in jeder Position des Verriegelungshakens zwischen der vorderen und der hinteren Rastposition betätigbar ist, d.h., wenn der Sensor nicht nur in der vorderen Rastposition des Verriegelungshakens betätigt wird, sondern auch in Zwischenpositionen und vorzugsweise bis einschließlich der hinteren Rastposition betätigt bleibt.

Die Betriebssicherheit der Verschlussvorrichtung lässt sich erhöhen, wenn eine Gegenlagererkennungseinrichtung vorgesehen wird, mittels der bei Außersolllage des Gegenlagers die Zuziehbewegung des Verriegelungshakens vor Erreichen seiner hinteren Rastposition blockierbar ist. Vorteilhafter Weise wird dem Bediener mittels der Steuerung über eine geeignete Anzeigevorrichtung angezeigt, falls sich das Gegenlager nicht in Solllage befindet, so dass dieser einen neuen Ankopplungsvorgang der Verschlussvorrichtung am Gegenlager vornimmt.

Die Abmessungen der Verschlussvorrichtung können reduziert werden, und es genügt eine einzige Hilfskraft-Betätigungsvorrichtung für die Betätigung sowohl der Verschiebe- als auch der Schwenkbewegung des Verriegelungshakens, wenn die Verschiebebewegung und die Schwenkbewegung des Verriegelungshakens von Schaltkulissen gesteuert werden, die in einem gemeinsamen Kulissenkörper integriert sind, der in einem an der Verschlussvorrichtung festgelegten Führungsschienenabschnitt verschiebbar aufgenommen ist. Vorzugsweise umfasst dabei die Hilfskraft-Betätigungsvorrichtung einen Elektromotor, der die Verschiebung des Kulissenkörpers bewirkt.

In weiterer Ausgestaltung der Erfindung handelt es sich bei dem Dachteil um eine Dachkassette, die Teil eines Falt- oder Lamellendaches ist, wobei öffnungsfähige Teile des Falt- oder Lamellendachs in dem Führungsschienenabschnitt der Verschlussvorrichtung aufnehmbar und mit Bezug auf den Führungsschienenabschnitt arretierbar sind.

Bewirkt der Elektromotor, welcher für die Verschiebung des Kulissenkörpers zum Einsatz kommt, auch eine Verschiebung eines Dachspitzengleiters, der mit einem vorderen Ende des Falt- oder Lamellendachs verbundenen ist und dessen Öffnungs- und Schließbewegung bewirkt, wobei der Dachspitzengleiter in dem Führungsschienenabschnitt aufnehmbar und in einer Halteposition arretierbar ist, so können sämtliche Bewegungsabläufe des Verriegelungshakens und des Falt- oder Lamellendachs von einem einzigen Elektromotor betätigt werden. Vorzugsweise ist der Elektromotor beispielsweise über drucksteife Kabel mit einen Mitnahmegleiter verbunden, der in dem Führungsschienenabschnitt verschiebbar aufgenommen ist und sowohl mit Bezug auf den Kulissenkörper als auch auf den Dachspitzengleiter an- und abkoppelbar ist.

Es ist von Vorteil, wenn der Dachspitzengleiter, sofern er sich in seiner Halteposition in dem Führungsschienenabschnitt befindet, einen Sensor betätigt, der in Signalverbindung mit der Steuerung steht. Da die Halteposition des Dachspitzengleiters von diesem eingenommen wird, wenn das Falt- oder Lamellendach vollständig geöffnet ist, ist das als Eingangssignal für die Steuerung dienende Signal "Dachspitzengleiter in Halteposition" gleichbedeutend damit, dass das Ende des Öffnungsweges des Falt- oder Lamellendachs erreicht ist.

Nachfolgend sind vorteilhafte Ausführungsformen der Erfindung anhand der Zeichnungen näher erläutert.

Es zeigt:
- Fig. 1: eine perspektivische Darstellung eines Fahrzeugs mit einem als Dachkassette ausgebildeten Dachteil, welches Teil eines Faltdachs ist und mittels einer Verschlussvorrichtung an einem an einer B-Säule des Fahrzeugs befestigten Gegenlager festgelegt ist, wobei das Faltdach sich in seiner geöffneten Position befindet;
- Fig. 2: eine perspektivische Darstellung ähnlich der Fig. 1, wobei die Dachkassette mitsamt den verschiebbaren Teilen des Faltdachs in eine Ablageposition abgesenkt ist;
- Fig. 3: eine perspektivische Darstellung der Verschlussvorrichtung, wobei sich ein Verriegelungshaken derselben in seiner hinteren Rastposition in Verriegelungsstellung befindet;
- Fig. 4: eine Explosionsdarstellung der Verschlussvorrichtung der Fig. 3;
- Fig. 5: eine Seitenansicht in Richtung auf eine Lagerplatte der Verschlussvorrichtung der Fig. 3;
- Fig. 6: eine Seitenansicht in Richtung auf eine Führungsschiene der Verschlussvorrichtung der Fig. 3;
- Fig. 7: einen schematischen Teilschnitt entlang der Linie VII-VII der Fig. 3, der in Prinzipdarstellung die Riegelsteinankopplungen eines motorisch verschiebbaren Mitnahmegleiters an einen die Bewegung des Verriegelungshakens der Verschlussvorrichtung steuernden Kulissenkörper sowie an einen Dachspitzengleiter des Faltdachs veranschaulicht;
- Fig. 8: eine perspektivische Darstellung einer abgewandelten Ausführungsform einer Verschlussvorrichtung, wobei sich ein Verriegelungshaken derselben in seiner hinteren Rastposition in Verriegelungsstellung befindet; und
- Fig. 9: ein Prinzipschaltbild einer Steuerung der Verschlussvorrichtung.

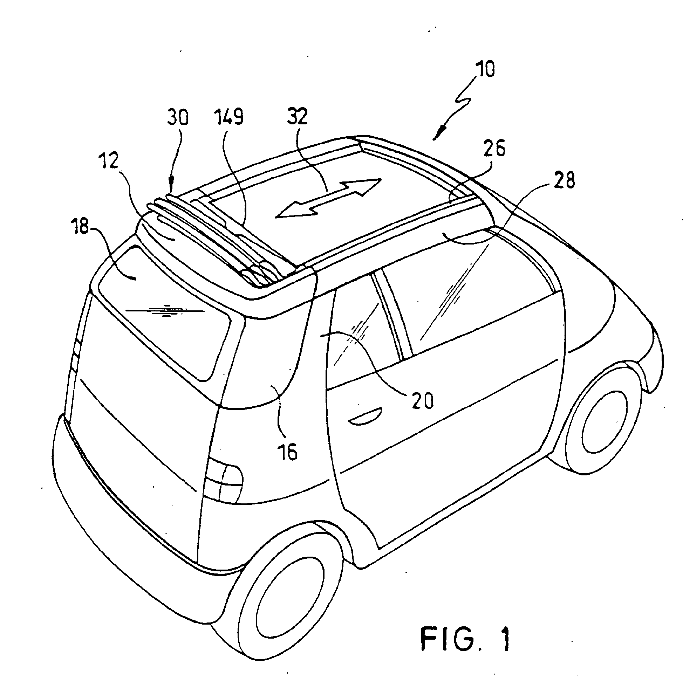

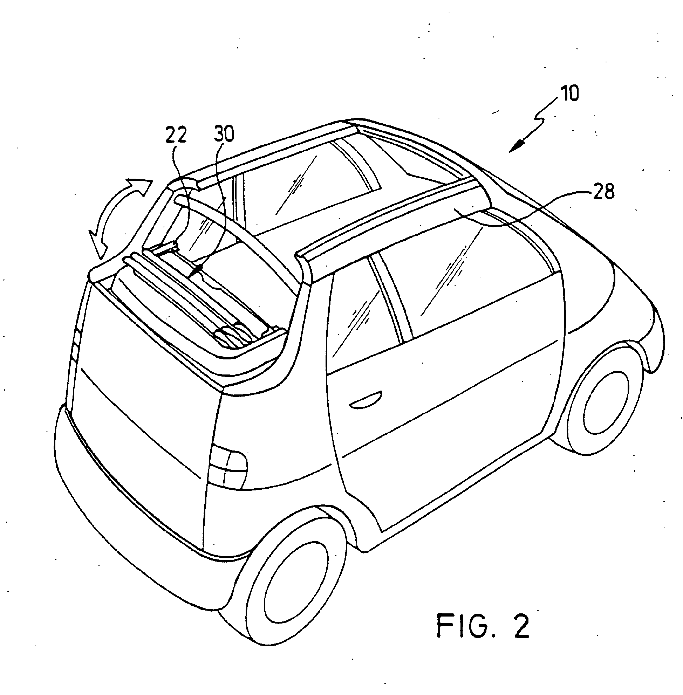

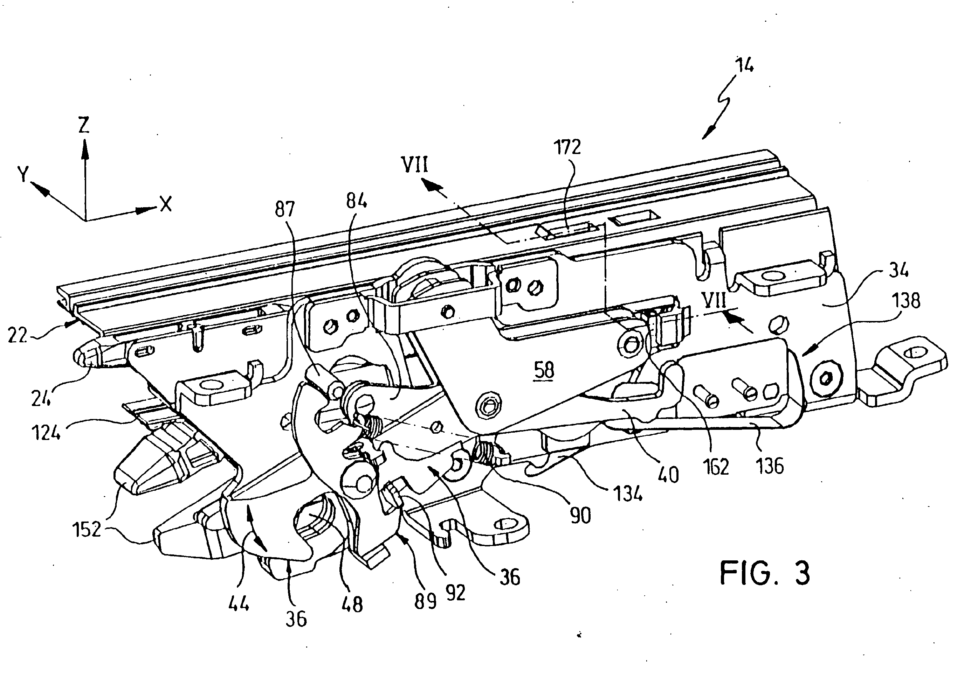

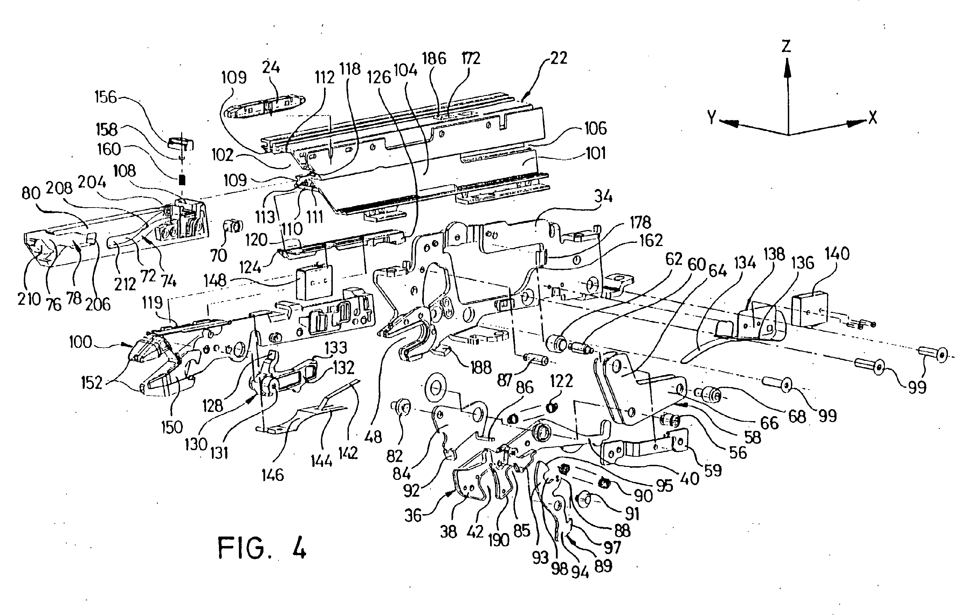

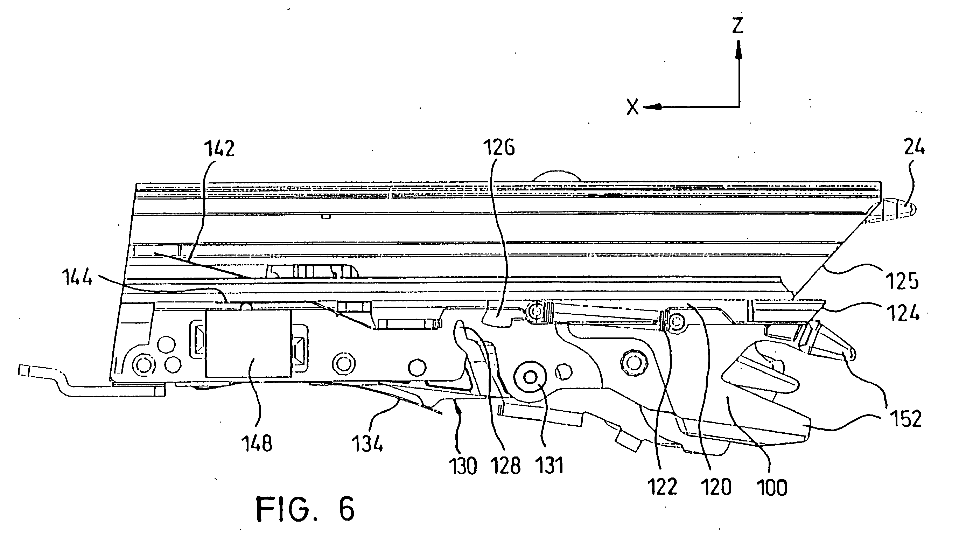

In den Fign. 1 und 2 ist ein Fahrzeug 10 mit einem Faltdach 30 gezeigt, welches in Öffnungs- bzw. Schließrichtung 32 verschiebbar in Führungsschienen aufgenommen ist, von denen ein vorderer Führungsschienenabschnitt 26 schwimmend in mit dem Fahrzeug 10 lösbar verbundenen Seitenholmen 28 aufgenommen ist. Das Faltdach 30 ist nach hinten in Öffnungsrichtung 32 soweit verschiebbar, dass seine Dachspitze 149 im wesentlichen bündig mit einer Vorderkante einer Dachkassette 12 abschließt und sämtliche verschiebbaren Teile des Faltdachs 30 in einem Führungsschienenabschnitt 22 einer Verschlussvorrichtung aufgenommen sind, von der eine erste, insgesamt mit 14 bezeichnete Ausführungsform in den Fign. 3 bis 7 veranschaulicht ist. Die Dachkassette 12 stellt ein an einem karosseriefesten Gegenlager des Fahrzeugs 10 mittels der Verschlussvorrichtung 14 festlegbares Dachteil dar, welches über ein nicht dargestelltes Viergelenk gelenkig mit der Fahrzeugkarosserie verbunden und bei geöffneter Verschlussvorrichtung 14 über das Viergelenk mitsamt faltbarer Seitenteile 16 und einem eine Kunststoff-Heckscheibe 18 umfassenden faltbaren Heckteil absenkbar ist. In abgesenkter Position der Dachkassette 12 kann die Verschlussvorrichtung 14 an einem am Viergelenk angebrachten weiteren Gegenlager festgelegt werden, um die Dachkassette in dieser Position zu halten. An der Dachkassette 12 sind zwei spiegelbildlich ausgeführte Verschlussvorrichtungen angebracht, wobei nur die in Fahrtrichtung gesehen linke Verschlussvorrichtung 14 wiedergegeben ist, sich aber alle Ausführungen sinngemäß auch auf die spiegelbildliche rechte Verschlussvorrichtung beziehen. Es sei ferner angemerkt, dass die in Fig. 3 bis 7 mit X bezeichnete Achse in Öffnungsrichtung des Faltdachs 30, d.h., in die gleiche Richtung wie der auf das Fahrzeugheck gerichtete Pfeil 32 in Fig. 1 weist.

Die beiden Verschlussvorrichtungen 14 sind symmetrisch zu einer in Fahrzeuglängsrichtung verlaufenden Symmetrieachse im Inneren der Dachkassette 12 nahe ihrer seitlichen Außenflächen dergestalt montiert, dass sie an den an den B-Säulen 20 angebrachten karosseriefesten Gegenlagern festgelegt werden können, wobei gleichzeitig die Führungsschienenabschnitte 22 der Verschlussvorrichtungen 14 mit den vorderen Führungsschienenabschnitten 26 der Seitenholme 28 fluchtend ausgerichtet werden, indem eine am Führungsschienenabschnitt 22 festgelegte Ausrichtleiste 24 als Ausrichtorgan in Eingriff mit den vorderen Führungsschienenabschnitten 26 gebracht wird.

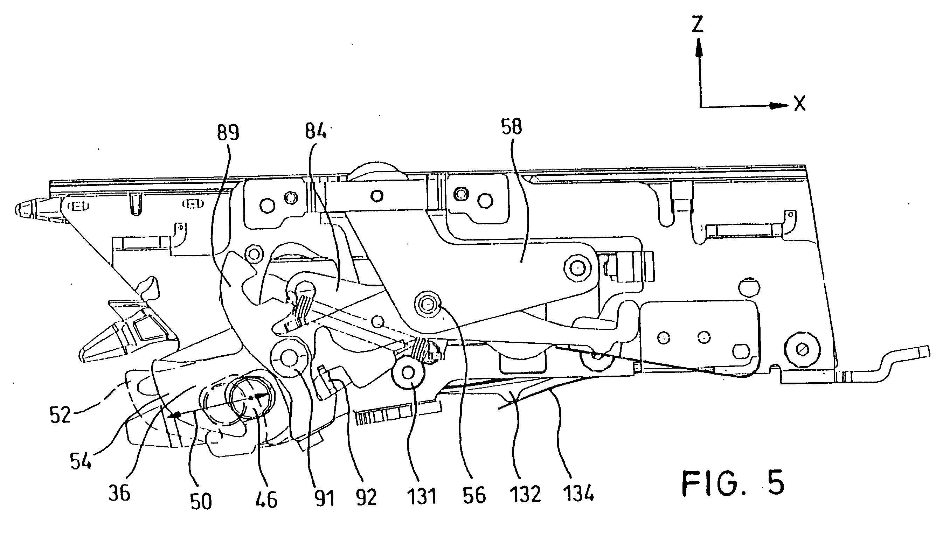

Die Verschlussvorrichtung 14 umfasst eine Lagerplatte 34 mit einem als Aufnahmenut 48 ausgebildeten Aufnahmeorgan, in welches ein Bolzen 46 des an der B-Säule 20 angebrachten Gegenlagers in Verschieberichtung 50 (vgl. Fig. 5) eingeführt und mittels einer Verriegelungsnut 42 eines Verriegelungshakens 36 verriegelt werden kann. Dabei ist die Verriegelungsnut 42 in einem vorderen Arm 38 des Verriegelungshakens 36 plaziert, der über einen Lagerstift 56 schwenkbar in einem geknickten Lagerhebel 58 aufgenommen ist. Der Lagerstift 56 des Verriegelungshakens 36 ist etwa mittig zwischen dem die Verriegelungsnut 42 umfassenden vorderen Arm 38 und einem hinteren Arm 40 angeordnet, wobei der Verriegelungshaken 36 um die Achse des Lagerstifts 56 in Schwenkrichtung 44 (siehe Fig. 3) zwischen einer in den Fign. 3, 5 und 6 dargestellten Verriegelungs- und einer Freigabestellung schwenkbar ist. In Verriegelungsstellung ist der Verriegelungshaken 36 ferner zwischen einer in Fig. 5 in unterbrochenen Linien wiedergegebenen vorderen Rastposition 52 und einer hinteren Rastposition 54 in Verschieberichtung 50 verschiebbar.

Der Lagerhebel 58 ist zweiteilig ausgebildet und umfasst zwei in Y-Richtung um die Dicke einer Buchse 62 beabstandete deckungsgleiche Hälften, deren Abstand so bemessen ist, dass der Verriegelungshaken 36 sowie ein weiter unten beschriebener Steuerhebel 84 zwischen ihnen aufgenommen werden kann. Die Buchse 62 ist auf eine Achse 60 aufgeschoben, die einen Arm 64 des Lagerhebels 58 dergestalt in Y-Richtung durchsetzt, dass sie die Hälften des Lagerhebels 58 beidseitig überragt und zum einen in der Lagerplatte 34 und zum anderen in einem den Arm 64 umgreifenden Lagerbügel 59 gehalten ist, welcher seinerseits an der Lagerplatte 34 festgelegt ist. Der Lagerhebel 58 ist mittels eines an seinem zweiten Arm 66 festgelegten Steuerstifts 68 um die Achse 60 schwenkbar, wobei der Steuerstift 68 den Lagerhebel in Y-Richtung überragt und in eine Steuerbahn 72 einer Schaltkulisse 74 eingreift, in der er über einen Gleitstein 70 geführt ist.

Die Schaltkulisse 74 ist in einem Kulissenkörper 80 integriert, der eine zweite Schaltkulisse 78 aufweist, in deren Steuerbahn 76 ein an dem Steuerhebel 84 festgelegter Steuerbolzen 82 verschiebbar aufgenommen ist und dessen Schwenkbewegung um die Achse des Lagerstifts 56 bewirkt, mittels dem der Steuerhebel 84 gemeinsam mit dem Verriegelungshaken 36 in dem Lagerhebel 58 gelagert ist, wobei sich der Steuerhebel in Richtung auf den vorderen Arm 38 des Verriegelungshakens 36 erstreckt. Eine Abkantung 92 des Steuerhebels 84 greift in eine in Z-Richtung offene Ausnehmung 85 des Verriegelungshakens 36 ein und dient der Mitnahme des Verriegelungshakens 36, wenn der Steuerhebel 84 über seinen Steuerbolzen 82 von der Steuerbahn 76 im Uhrzeigersinn geschwenkt wird (die vorliegend verwendeten Begriffe Uhrzeigersinn und Gegenuhrzeigersinn beziehen sich jeweils auf eine Betrachtung in Y-Richtung).

Ein Haltehebel 89 ist etwa mittig durch einen Ansatzbolzen 91 schwenkbar auf dem Verriegelungshaken 36 im Bereich zwischen der Ausnehmung 85 und der Verriegelungsnut 42 gelagert, wobei eine Zugfeder 90 zwischen einem an einem ersten Arm 93 des Haltehebels 89 befindlichen Vorsprung 88 und einer Abkantung 86 des Steuerhebels 84 vorgesehen ist. Mittels der Zugfeder 90 wird dem Steuerhebel 84 eine Vorspannung im Uhrzeigersinn dergestalt aufgeprägt, dass die Abkantung 92 des Steuerhebels 84 spielfrei in der Ausnehmung 85 des Verriegelungshakens 36 anliegt, wobei gleichzeitig der Haltehebel 89 ebenfalls im Uhrzeigersinn geschwenkt wird und dieser mittels einer an seinem ersten Arm 93 vorgesehenen Schrägfläche 95 vorgespannt an einem sich in -Y-Richtung erstreckenden, an der Lagerplatte 34 festgelegten Haltebolzen 87 anliegt, sofern sich der Verriegelungshaken 36 außerhalb seiner Freigabestellung befindet. Die im ersten Arm 93 des Haltehebels 89 oberhalb eines im wesentlichen in X-Richtung geöffneten Rastbereichs 98 angeordnete Schrägfläche 95 ist so ausgebildet, dass über die vorgespannte Anlage der Schrägfläche 95 an dem Haltebolzen 87 eine Kraft auf den Verriegelungshaken 36 ausgeübt wird, die letzteren im Gegenuhrzeigersinn um die Achse des Lagerstifts 56 dreht, und der Verriegelungshaken 36 über eine sich in Längsrichtung des Fahrzeugs 10 gesehen hinter der Verriegelungsnut 42 liegende (d.h., ausgehend von der Verriegelungsnut 42 in positiver X-Richtung versetzt angeordnete), in Verschieberichtung 50 verlaufende Gleitfläche 190 auf einer Abkantung 188 der Lagerplatte 34 aufliegt. Der Haltebolzen 87 dient ferner als Fangvorrichtung, in die der Rastbereich 98 des Haltehebels 89 eingreift, wenn der Verriegelungshaken 36 sich in seiner Freigabestellung befindet.

Ein zweiter Arm 94 des Haltehebels 89, der sich unterhalb des Ansatzbolzens 91 (d.h., mit Bezug auf diesen in negativer Z-Richtung versetzt) befindet, weist einen im wesentlichen in X-Richtung überstehenden Vorsprung 97 auf, der, um den Steuerhebel 84 mit Bezug auf den Verriegelungshaken 36 festzulegen, an eine Unterseite der Abkantung 92 des Steuerhebels 84 anlegbar ist, sobald sich der Verriegelungshaken 36 seiner hinteren Rastposition 54 nähert.

Eine insgesamt mit 100 bezeichnete, sich im wesentlichen in X-Richtung erstreckende Ausrichtplatte ist mit der Lagerplatte 34 über mehrere Schrauben 99 verbunden, die gleichzeitig einen unteren Bereich des Führungsschienenabschnitts 22 durchsetzten, der überdies über nicht dargestellte Blindniete in seinem oberen Bereich direkt an der Lagerplatte 34 festgelegt ist, wobei ein fester Zusammenhalt von Lagerplatte 34, Führungsschienenabschnitt 22 und Ausrichtplatte 100 erzielt wird. Der Führungsschienenabschnitt 22 weist eine untere und eine obere Gleitbahn 101 bzw. 102 auf, die durch eine in der X-Z-Ebene verlaufende Trennwand 104 voneinander getrennt sind. Die untere Gleitbahn 101 ist seitlich von der Trennwand 104 und einer Rückwand der Lagerplatte 34 sowie nach oben und unten durch Schenkel, die sich ausgehend von der Trennwand 104 in -Y-Richtung erstrecken, begrenzt und in +/- X-Richtung offen. Sie dient der in +/- X-Richtung verschieblichen Aufnahme des Kulissenkörpers 80, der seinerseits eine in Y-Richtung überstehende Anlaufkante 108 aufweist, die durch einen Durchbruch 106 in der Trennwand 104 in den Bereich der Gleitbahn 102 hineinreicht. Dabei ist der Kulissenkörper 80 in +/- X-Richtung zwischen einer hinteren und einer vorderen Endlage verschiebbar.

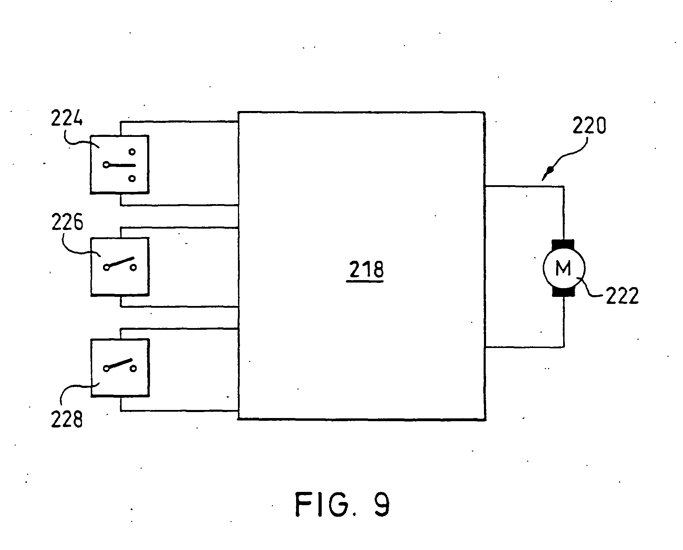

Die Gleitbahn 102 ist nach oben und unten durch sich in Y-Richtung erstreckende Schenkel 112 bzw. 110 begrenzt und mittels senkrecht auf den Schenkeln 110 und 112 angeordneter Stege 109 in wenigstens zwei offene Kammern 111, 113 unterteilt, von denen die innere Kammer 111 der Aufnahme eines Mitnahmegleiters 114 und die äußere Kammer 113 der Aufnahme eines Dachspitzengleiters 116 dient. Beide Gleiter 114 und 116 sind in +/- X-Richtung verschiebbar, wobei am Mitnahmegleiter 114 ein drucksteifes Kabel 174 angebracht ist, welches über einen an der Dachkassette 12 festgelegten Elektromotor 222 (siehe Fig. 9) als Teil einer Hilfskraft-Betätigungsvorrichtung 220 bewegbar ist und in einem Kabelkanal 118 geführt wird, der seitlich neben der Gleitbahn 102 in der Trennwand 104 aufgenommen ist.

Zwischen einer Oberseite 119 der Ausrichtplatte 100 und einer Unterseite des Schenkels 110 ist ein in +/- X-Richtung verschiebbarer Tastgleiter 120 als Teil einer Gegenlagererkennungseinrichtung aufgenommen, der durch Wirkung einer zwischen dem Tastgleiter 120 und der Ausrichtplatte 100 angebrachten Zugfeder 122 in -X-Richtung dergestalt vorgespannt wird, dass seine Tastspitze 124 eine Vorderkante 125 des Führungsschienenabschnitts 22 überragt. An dem der Tastspitze 124 in X-Richtung gesehen gegenüberliegenden Ende des Tastgleiters 120 ist ein Ausrücker 126 angeordnet, der mit einem Ausrückarm 128 eines geknickten Sperrhebels 130 wechselwirkt, der seinerseits um eine Achse 131 schwenkbar zwischen der Lagerplatte 34 und der Ausrichtplatte 100 gelagert ist. An einem sich im wesentlichen senkrecht zu dem Ausrückarm 128 erstreckenden Arm 132 des Sperrhebels 130 ist eine Sperrnase 133 vorgesehen, die ausgelegt ist, in eine komplementär geformte, nicht dargestellte Anlaufkante an der Unterseite des Kulissenkörpers 80 einzugreifen, wenn sich der Kulissenkörper 80 in einer hinter seiner vorderen Endlage befindlichen Warnposition aufhält. Dabei ist die Warnposition des Kulissenkörpers 80 mit Bezug auf die Lagerplatte 34 an einer Stelle angeordnet, die sich zwischen der vorderen und der hinteren Endlage des Kulissenkörpers 80 befindet, wobei die vordere Endlage einer kleineren X-Koordinate entspricht als die hintere Endlage.

Der Sperrhebel 130 wird mittels eines Federarms 134 einer zwei Federarme 134 und 136 umfassenden Kombifeder 138 im Gegenuhrzeigersinn belastet, so dass die Sperrnase 133 bei sich in Warnposition befindlichem Kulissenkörper 80 vorgespannt an dessen Anlaufkante anliegt und verhindert, dass der Kulissenkörper 80 seine vordere Endlage erreicht, falls sich das Gegenlager nicht in seiner Solllage mit Bezug auf die Verschlussvorrichtung 14 befindet. Der Kulissenkörper ist in diesem Fall nur zwischen seiner hinteren Endlage und seiner Warnposition verschiebbar. Wird hingegen beim Ankopplungsvorgang der Verschlussvorrichtung 14 an das Gegenlager die Solllage des Gegenlagers relativ zur Verschlussvorrichtung 14 erreicht, kommt die Tastspitze 124 des Tastgleiters 120 an dem Gegenlager zur Anlage, der Tastgleiter 120 wird in X-Richtung entgegen der Kraft der Zugfeder 122 so weit verschoben, dass der Ausrücker 126 den Ausrückarm 128 des Sperrhebels 130 betätigt und letzteren um die Achse 131 im Uhrzeigersinn entgegen der Wirkung des Federarms 134 schwenkt, und die Sperrnase 133 des Sperrhebels 130 gelangt außer Eingriff mit Bezug auf die Anlaufkante an der Unterseite des Kulissenkörpers 80. Der Kulissenkörper 80 ist nun weiter nach vorne (also in -X-Richtung) in Richtung auf seine vordere Endlage verschiebbar. Der zweite Federarm 136 der Kombifeder 138 ist nach oben in Z-Richtung vorgespannt und kann entgegen seiner Vorspannung von dem hinteren Arm 40 des Verriegelungshakens 36 nach unten ausgelenkt werden, wenn sich der Verriegelungshaken 36 in seiner Freigabestellung befindet. Dabei wird vom Federarm 136 in seiner nach oben vorgespannten Grundstellung ein elektrischer Mikroschalter 140 betätigt, der gemeinsam mit der Kombifeder 138 an der Lagerplatte 34 festgelegt ist, wobei der Mikroschalter 140 ein entsprechendes Signal "Verriegelungshaken in Verriegelungsstellung" liefert. Dieses Signal wird als Eingangsgröße in eine die motorische Betätigung der Verschlussvorrichtung 14 steuernde elektronische Steuerung 218 (vgl. Fig. 9) eingespeist, die ebenfalls die Steuerung der motorischen Betätigung der Öffnungs- und Schließbewegung des Faltdachs 30 übernimmt.

Es kann ferner vorgesehen sein, den Federarm 136 anstelle seiner federnden Vorspannung nach oben formschlüssig mit dem hinteren Arm 40 des Verriegelungshakens 36 zu verbinden, so dass letzterer den Federarm 136 in beide Richtungen, d.h., nach oben und unten, betätigt.

Alternativ zur Wechselwirkung der Tastspitze 124 des Tastgleiters 120 mit dem Gegenlager kann auch eine Wechselwirkung der Tastspitze 124 mit dem Seitenholm 28 vorgesehen sein, wobei dann, wenn der Seitenholm 28 sich in Solllage befindet und er insbesondere mit dem Fahrzeug verriegelt ist, der Tastgleiter 120 beim Ankopplungsvorgang der Verschlussvorrichtung 14 an das Gegenlager vom Seitenholm 28 betätigt und in X-Richtung so weit verschoben wird, dass die Sperrnase 133 des Sperrhebels 130 an den Kulissenkörper 80 nicht mehr in seiner Warnposition arretiert. Ist der Seitenholm 28 hingegen vom Fahrzeug abgenommen oder befindet er sich aus einem anderen Grund nicht in seiner Solllage mit Bezug auf die Verschlusseinrichtung 14 in Ankoppelstellung, wird die Tastspitze 124 beim Ankopplungsvorgang nicht oder nicht weit genug in X-Richtung betätigt und der Kulissenkörper 80 bei Erreichen seiner Warnposition arretiert, auch wenn sich das Gegenlager in Solllage befindet. Somit wird die Gegenlagererkennungseinrichtung im Prinzip zur Seitenholmerkennung verwendet. Dies hat den weiteren Vorteil, dass bei Ankopplung der Verschlussvorrichtung 14 an das weitere Gegenlager, welches am Viergelenk angebracht ist, der Kulissenkörper 80 nicht weiter als bis in seine Warnposition verschoben werden kann, da sich zwar das am Viergelenk vorgesehene Gegenlager in Solilage befindet, ein Seitenholm aber nicht vorhanden ist. Somit wird verhindert, dass die weiter unten beschriebene Arretierung des Dachspitzengleiters 116 mit Bezug auf die Verschlusseinrichtung 14 gelöst wird, wenn die Verschlussvorrichtung 14 am Gegenlager des Viergelenks angekoppelt wird.

Eine Ausrichtgabel 152 an einem vorderen Ende der Ausrichtplatte 100 dient der Ausrichtung der Verschlussvorrichtung 14 in Y- und Z-Richtung mit Bezug auf den vorderen Führungsschienenabschnitt 26, zu welchem Zweck die Ausrichtgabel 152 in ein komplementär geformtes Ausrichtlager eingreift, welches eine Einheit mit dem schwimmend im Seitenholm 28 gelagerten vorderen Führungsschienenabschnitt 26 bildet. Die am Führungsschienenabschnitt 22 der Verschlussvorrichtung 14 festgelegte Ausrichtleiste 24, die sich in Z-Richtung oberhalb der Ausrichtgabel 152 befindet und in Eingriff mit dem vorderen Führungsschienenabschnitt 26 gebracht werden kann, verhindert eine Verkippung um die X-Achse des vorderen Führungsschienenabschnitts 26 mit Bezug auf den Führungsschienenabschnitt 22. Eine Ausrichtfläche 150 ist an einer Seitenfläche der Ausrichtgabel 152 in der X-Z-Ebene gelegen und an die Stirnfläche des Bolzens 46 des an der B-Säule 20 angebrachten Gegenlagers anlegbar, so dass im Zusammenwirken mit der spiegelbildlichen rechten Verschlussvorrichtung und dem rechten Bolzen eine in Y-Richtung gesehen symmetrische Ausrichtung der gesamten Dachkassette 12 mit Bezug auf die beiden karosseriefesten Bolzen 46 erfolgt.

An einer in Y-Richtung verlaufenden Abkantung der Ausrichtplatte 100 ist eine Endlagenfeder 146 festgelegt, die zwei Federarme 142 und 144 umfasst, von denen der Federarm 142 von unten in die Kammer 113 eingreift, in der der Dachspitzengleiter 116 aufgenommen ist, welcher mit einer Dachspitze 149 des Faltdachs 30 verbunden ist und die Öffnungs- und Schließbewegung desselben bewirkt. Der zweite Federarm 144 ist ausgelegt, einen elektrischen Mikroschalter 148 mechanisch zu betätigen, wenn sich der Dachspitzengleiter 116 in einer Halteposition befindet, wobei der Mikroschalter 148 das Signal "Dachspitzengleiter in Halteposition" an die elektronische Steuerung 218 gibt (siehe Fig. 9). In dieser Position ist der Dachspitzengleiter 116 vollständig in dem Führungsschienenabschnitt 22 der Verschlussvorrichtung 14 aufgenommen und lässt sich mit Bezug auf den Führungsschienenabschnitt 22 arretieren. Mit dem Dachspitzengleiter 116 sind sämtliche verschiebbaren Teile des Faltdachs 30 in dem Führungsschienenabschnitt 22 gehalten und können mitsamt der Dachkassette 12 von dem karosseriefesten Gegenlager abgekoppelt werden.

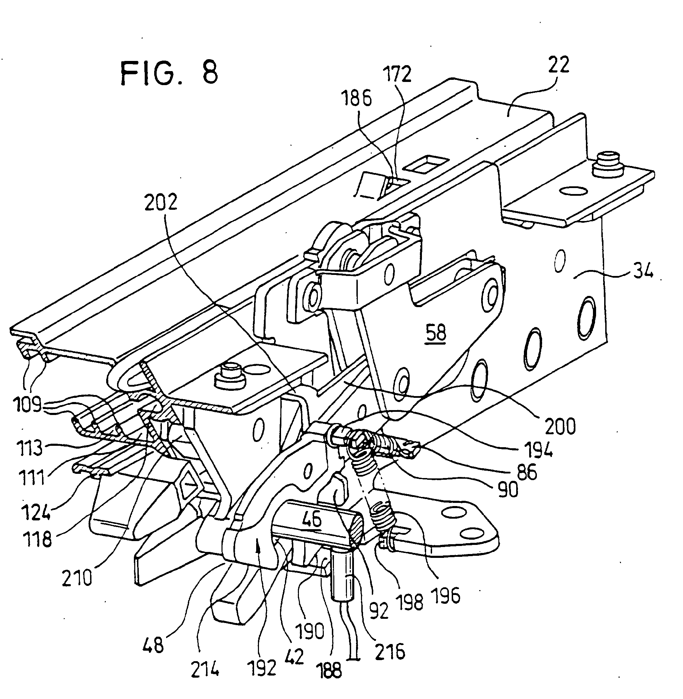

Wie aus Fig. 9 ersichtlich wird, erhält die Steuerung 218 der Hilfskraft-Betätigungsvorrichtung 220 neben den Signalen eines zwei Schaltpositionen ("Öffnen" und "Schließen") aufweisenden Betätigungsschalters 224 auch die Signale zweier Sensoren 226 und 228 als Eingangsgrößen. Der Betätigungsschalter 224 ist vom Bediener bedienbar und dient der Einleitung sowohl der Öffnungs- und Schließbewegung des Faltdachs als auch der An- und Abkopplungsbewegung der Verschlussvorrichtung, d.h., der Schwenk- und Verschiebebewegungen des Verriegelungshakens. Alternativ können zwei Betätigungsschalter vorgesehen sein, von denen einer die Öffnungs- und Schließbewegung des Faltdachs und einer bei vollständig geöffnetem Faltdach die An- und Abkopplungsbewegung der Verschlussvorrichtung einleitet. Bei den beiden Sensoren 226 und 228 handelt es sich im Fall der ersten Ausführungsform der Verschlussvorrichtung (dargestellt in den Fign. 3 bis 7) um die Mikroschalter 148 bzw. 140. Bei der weiter unten im Zusammenhang mit Fig. 8 beschriebenen zweiten Ausführungsform der Verschlussvorrichtung wird als Sensor 228 anstelle des Mikroschalters 140 ein induktiver Sensor 216 eingesetzt.

Bei geschlossenem Faltdach 30 befinden sich der Dachspitzengleiter 116 und der Mitnahmegleiter 114 in dem vorderen Führungsschienenabschnitt 26 und sind mittels eines Riegelsteins 164 formschlüssig miteinander verbunden, der in Z-Richtung verschiebbar im Dachspitzengleiter 116 aufgenommen ist. Die Dachkassette 12 ist über die Verschlussvorrichtungen 14 an den B-Säulen 20 des Fahrzeugs 10 festgelegt, wobei sich der Verriegelungshaken 36 in Verriegelungsstellung in seiner hinteren Rastposition 54 aufhält. Der Kulissenkörper 80 steht in seiner vorderen Endlage und ist in dieser durch einen in Y-Richtung verschiebbar gelagerten Riegelstein 156, der mittels einer über eine Druckfeder 160 belasteten Kugel 158 in seinen Endlagen einrastbar ist, in einer Aussparung 162 der Lagerplatte 34 gehalten. Während der die Schwenkbewegung des Lagerhebels 58 und damit die Verschiebebewegung des Verriegelungshakens 36 steuernde Steuerstift 68 mit dem Gleitstein 70 am hinteren Ende eines Haltebereichs 204 der Steuerbahn 72 der Schaltkulisse 74 steht, befindet sich der Steuerbolzen 82 des Steuerhebels 84 in einem Haltebereich 206 der Steuerbahn 76 der für die Schwenkbewegung des Verriegelungshakens 36 zuständigen Schaltkulisse 78. Der Haltehebel 89 ist durch Anlage seiner Schrägfläche 95 an dem Haltebolzen 87 soweit im Gegenuhrzeigersinn geschwenkt, dass sein Vorsprung 97 die Abkantung 92 des Steuerhebels 84 untergreift und diesen mit Bezug auf den Verriegelungshaken 36 festlegt. Da die Position des Steuerhebels 84 seinerseits durch seine Aufnahme sowohl im Lagerhebel 58 (durch den Lagerstift 56) als auch im Haltebereich 206 der Schaltkulisse 78 (durch den Steuerbolzen 82) fest vorgegeben ist, ist der Verriegelungshaken 36 letztendlich in seiner Verriegelungsposition blockiert. Damit sich der Kulissenköper 80 in seiner vorderen Endlage befinden kann, muss selbstverständlich wie oben beschrieben das Gegenlager bzw. der Seitenholm 28 in Solllage stehen, der Tastgleiter 120 betätigt und die Sperrnase 133 des Sperrhebels 130 außer Eingriff mit Bezug auf die an der Unterseite des Kulissenkörpers 80 angeordnete Anlaufkante sein.

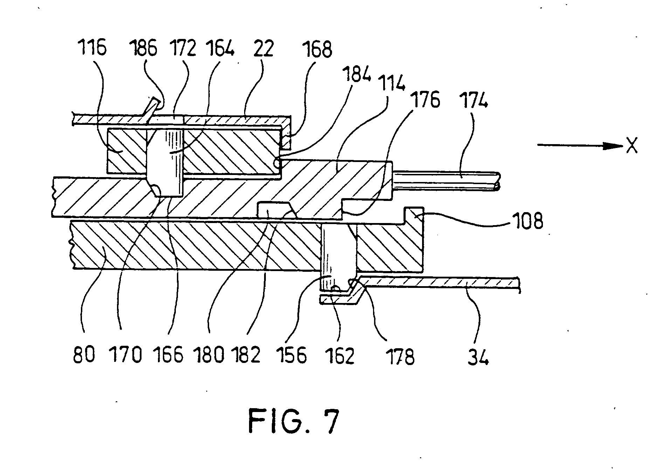

Um die Dachkassette 12 von der B-Säule 20 abzukoppeln, muss zunächst durch Betätigung der Schaltposition "Öffnen" des Betätigungsschalter 224 das Faltdach 30 geöffnet werden, indem der Dachspitzengleiter 116 in Öffnungsrichtung 32 nach hinten verschoben wird. Die Verschiebebewegung wird dem Dachspitzengleiter 116 vom Mitnahmegleiter 114 aufgeprägt, der seinerseits mittels der an sich bekannten drucksteifen Kabel 174 über den Elektromotor 222 bewegt wird, der in der Dachkassette 12 aufgenommen ist. Sowohl der Dachspitzengleiter 116 als auch der Mitnahmegleiter 114 gelangen schließlich von dem vorderen Führungsschienenabschnitt 26 in den Führungsschienenabschnitt 22 der Verschlussvorrichtung 14, wobei der Dachspitzengleiter 116, sobald er in seiner Halteposition angelangt ist, an einen Anschlag 168 anstößt, der in dem Führungsschienenabschnitt 22 vorgesehen ist und eine weitere Verschiebung des Dachspitzengleiters 116 nach hinten (in X-Richtung) verhindert (siehe Fig. 7), wobei auch wie oben beschrieben der elektrische Mikroschalter 148 vom Federarm 144 betätigt wird. Der Mitnahmegleiter 114 hat jetzt seine in Fig. 7 wiedergegebene Übergabeposition erreicht. Betätigt der Bediener weiterhin die Schaltposition "Öffnen" des Betätigungsschalters 224, so wird bei an der Steuerung 218 anliegendem Signal "Dachspitzengleiter in Halteposition" des Mikroschalters 148 die Abkopplungsbewegung der Verschlussvorrichtung eingeleitet, und zwar vorzugsweise erst, nachdem bestimmte Sicherheitsbedingungen erfüllt sind. Hierzu kann z.B. zählen, dass das Fahrzeug nicht bewegt werden darf und/oder dass der Bediener den Betätigungsschalter 224 während einer vorbestimmten Betätigungszeit in der Schaltposition "Öffnen" halten muss.

Bei Einleitung des Abkopplungsvorgangs wird zunächst der Mitnahmegleiter 114 vom Elektromotor 222 über das drucksteife Kabel 174 mit einer Kraft in X-Richtung beaufschlagt, so dass eine Schrägfläche 170 in einer den Riegelstein 164 aufnehmenden Aussparung 166 in dem Mitnahmegleiter 114 eine Kraft in Z-Richtung auf den Riegelstein 164 ausübt, die ausreicht, letzteren in Z-Richtung so weit zu verschieben, dass der Riegelstein 164 außer Eingriff mit Bezug auf die Aussparung 166 in dem Mitnahmegleiter 114 gelangt und mit seinem dem Mitnahmegleiter 114 abgewandten Ende in eine Aussparung 172 in dem Führungsschienenabschnitt 22 geschoben wird. Damit ist der Dachspitzengleiter 116 formschlüssig in dem Führungsschienenabschnitt gehalten, und der Mitnahmegleiter 114 für eine weitere Verschiebung in X-Richtung freigegeben, wobei die dem Dachspitzengleiter 116 zugewandte Seite des Mitnahmegleiters 114 so ausgebildet ist, dass ein Lösen der Formschlussverbindung zwischen dem Dachspitzengleiter 116 und dem Führungsschienenabschnitt 22 durch eine Verschiebung des Riegelsteins 164 im Dachspitzengleiter 116 in -Z-Richtung ausgeschlossen ist. Nach Durchlaufen einer vorbestimmten Wegstrecke kommt der Mitnahmegleiter 114 mittels seiner Koppelfläche 176 an der Anlaufkante 108 des sich in der vorderen Endlage gemäß Fig. 7 befindlichen Kulissenkörpers 80 zur Anlage, wobei gleichzeitig eine komplementär zum Riegelstein 156 geformte Aussparung 180 in der dem Kulissenkörper 80 zugewandten Seite des Mitnahmegleiters 114 so zu liegen kommt, dass bei weiterer Kraftausübung in X-Richtung auf den Mitnahmegleiter 114 dieser den Kulissenkörper 80 über die an der Anlaufkante 108 anliegende Koppelfläche 176 mitnimmt, wobei eine Schrägfläche 178 in der den Riegelstein 156 aufnehmenden Aussparung 162 in der Lagerplatte 34 eine Kraft in Y-Richtung auf den Riegelstein 156 ausübt, die den Riegelstein 156 in dem Kulissenkörper 80 in seine zweite Endlage verschiebt, in der der Riegelstein 156 außer Eingriff mit Bezug zur Aussparung 162 und in Eingriff mit Bezug zur Aussparung 180 steht. Der Riegelstein 156 löst die Formschlussverbindung des Kulissenkörpers 80 mit der Lagerplatte 34 und bildet zur gleichen Zeit eine solche zwischen dem Kulissenkörper 80 und dem Mitnahmegleiter 114, der den Kulissenkörper 80 in Richtung auf dessen hintere Endlage mitnimmt. Dabei ist eine Verschiebung des Riegelsteins 156 in -Y-Richtung aus der Aussparung 180 heraus nicht nur aufgrund der federbelasteten Kugel 158 ausgeschlossen, die den Riegelstein 156 in seiner Endlage hält, sondern auch dadurch, dass die dem Mitnahmegleiter 114 zugewandte Seite der Lagerplatte 34 hinter der Schrägfläche 178 entsprechend nahe an den Kulissenkörper 80 herangeführt ist.

Es sei darauf hingewiesen, dass der Mitnahmegleiter 114 den Kulissenkörper 80 in dessen hintere Endlage in X-Richtung über die Koppelfläche 176 mitnimmt, welche an der Kontaktfläche (Anlaufkante 108) anliegt. Die Mitnahme des Kulissenkörpers 80 in Richtung auf dessen vordere Endlage (in X-Richtung) erfolgt mittels der Formschlussverbindung zwischen dem Mitnahmegleiter 114 und dem Kulissenkörper 80, die über den Riegelstein 156 bewirkt wurde.

Alternativ zur oben beschriebenen Verrastung des Riegelsteins 156 in seinen beiden Endlagern, kann der Riegelstein 156 auch nur in seiner in Fig. 7 gezeigten Endlage mittels der federbelasteten Kugel 158 verrastet sein.

Bei Verschiebung des Kulissenkörpers 80 in X-Richtung auf seine hintere Endlage hin, gelangt der Gleitstein 70, der auf dem Steuerstift 68 des Lagerhebels 58 aufgenommen ist, zunächst von dem Haltebereich 204 in einen rampenförmig nach unten verlaufenden Verschiebebereich 208 der Steuerbahn 72. Hierbei wird dem Lagerhebel 58 um dessen Achse 60 eine Schwenkbewegung im Uhrzeigersinn aufgezwungen, die über den Lagerstift 56 in eine Verschiebebewegung des Verriegelungshakens 36 umgeformt wird, wobei der Verriegelungshaken 36 von seiner hinteren Rastposition 54 in Verschieberichtung 50 nach vorne in -X-Richtung auf seine vordere Rastposition 52 hin verschoben wird und über seine Gleitfläche 190 auf der Abkantung 188 der Lagerplatte 34 gleitet. Die vordere Rastposition 52 ist erreicht, wenn sich der Gleitstein 70 in der tiefsten Stelle des rampenförmigen Verschiebebereichs 208 der Steuerbahn befindet und in einen vorderen Haltebereich 212 übergeht, in dem er im wesentlichen horizontal geführt wird, so dass der Lagerhebel 58 keine Schwenkbewegung mehr durchführt.

Etwa bei Erreichen der vorderen Rastposition 52 wird durch weitere Verschiebung des Kulissenkörpers 80 in X-Richtung die Schwenkbewegung des Verriegelungshakens 36 von seiner Verriegelungs- in seine Freigabestellung eingeleitet, indem der Steuerbolzen 82 des Steuerhebels 84 den Haltebereich 206 der Steuerbahn 76 verlässt und auf einen aufwärts gerichteten Bereich einer Schwenknocke 210 trifft, die die Steuerbahn 76 im vorderen Bereich in der Form eines liegenden Y aufteilt. Der Steuerbolzen 82 folgt dem oberen Schenkel des liegenden Y und prägt über die Abkantung 92 dem Verriegelungshaken 36 eine Schwenkbewegung um die Achse des Lagerstifts 56 auf, der auch den Steuerhebel 84 schwenkbar mit dem Lagerhebel 58 verbindet. Sobald der Verriegelungshaken 36 in die Freigabestellung angehoben ist, rastet der Rastbereich 98 des Haltehebels 89 in den Haltebolzen 87 ein und hält den Verriegelungshaken 36 in seiner Freigabestellung. Dabei wird über den Federarm 136 die Betätigung des Mikroschalters 140 aufgehoben und der Bolzen 46 des Gegenlagers kommt aus der Verriegelungsnut 42 des Verriegelungshakens 36 frei, so dass die Dachkassette 12 von der B-Säule 20 abgekoppelt ist und, wie bereits im Zusammenhang mit den Fign. 1 und 2 beschrieben wurde, abgesenkt werden kann.

Der Ankopplungsvorgang der Dachkassette 12 mittels der Verschlussvorrichtung 14 am karosseriefesten Gegenlager verläuft sinngemäß in umgekehrter Reihenfolge, wobei auf folgende Besonderheiten hingewiesen werden soll: Befindet sich der Kulissenkörper 80 in seiner hinteren Endlage, steht der Steuerbolzen 82 vor der Vorderkante der Schwenknocke 210. Wird die Verschlussvorrichtung 14 manuell gegen das Gegenlager gedrückt, stößt zunächst der Bolzen 46 von vorne gegen den in die Aufnahmenut 48 hineinragenden zweiten Arm 94 des Haltehebels 89, wodurch diesem eine Schwenkbewegung gegen den Uhrzeigersinn aufgezwungen wird. Beim Auftreffen des Bolzens 46 auf die Rückwand der Verriegelungsnut 42 übt dieser auf den Verriegelungshaken 36 eine Kraft aus, deren Wirkungslinie unterhalb des Lagerstifts 56 verläuft, so dass dem Verriegelungshaken 36 zusätzlich zu der von der Zugfeder 90 ausgeübten Kraft auch ein Drehmoment im Gegenuhrzeigersinn aufgeprägt wird. Auf diese Weise kommt der Rastbereich 98 des Haltehebels 89 vom Haltebolzen 87 frei, und der Verriegelungshaken 36 kann in seine Verriegelungsstellung schwenken, ohne dass der Steuerbolzen 82 diese Schwenkbewegung behindert, da er außerhalb der Steuerbahn 76 steht. Sobald die Schrägfläche 95 des Haltehebels 89 an dem Haltebolzen anliegt, wird der Verriegelungshaken 36, wie bereits beschrieben, durch die Zugfeder 90 in Richtung auf die Verriegelungsstellung vorgespannt. Hat der Verriegelungshaken 36 seine Verriegelungsstellung erreicht, wird der Mikroschalter 140 betätigt und liefert als Sensor 228 der Steuerung 218 das Eingangssignal "Verriegelungshaken in Verriegelungsstellung". Nach dem optionalen Ablauf einer vorbestimmten Totzeit, beispielsweise nach Ablauf von 0,5 Sekunden, löst die Steuerung 218 die automatische Zuziehbewegung des Verriegelungshakens 36 aus, indem sie den Elektromotor 222 ansteuert, der seinerseits die Verschiebung des Kulissenkörpers 80 nach vorn in Richtung auf seine vordere Endlage betätigt.

Bei Bewegung des Kulissenkörpers 80 nach vorne (in -X-Richtung) wird der Steuerbolzen 82 des Steuerhebels 84 durch die Schwenknocke 210 nach unten ausgelenkt und in den unteren Arm des liegenden Y eingeführt. Diese Bewegung wird nicht auf den Verriegelungshaken 36 übertragen, da die Abkantung 92 des Steuerhebels 84 noch nicht von dem Vorsprung 97 des Haltehebels 89 untergriffen wird, sondern vielmehr nach unten aus der Ausnehmung 85 des Verriegelungshakens 36 auswandern kann. Erst wenn der Verriegelungshaken 36 weiter in Richtung auf seine hintere Rastposition 54 verschoben wird, ist der Haltehebel 89 soweit im Gegenuhrzeigersinn verschwenkt, dass der Steuerhebel 84 mit Bezug zum Verriegelungshaken 36 durch Untergreifen der Unterkante der Abkantung 92 mittels des Vorsprungs 97 des Haltehebels 89 festgelegt ist. Sollten sich das Gegenlager und/oder der Seitenholm 28 in Außersolllage befinden, wird die Tastspitze 124 des Tastgleiters 120 nicht oder nicht weit genug in X-Richtung betätigt und der Kulissenkörper 80 vor Erreichen der vorderen Endlage in der Warnposition angehalten, indem die an seiner Unterseite befindliche Anlaufkante an die Sperrnase 133 des Sperrhebels 130 anstößt. Dabei wird der das drucksteife Kabel 174 betätigende Elektromotor 222 blockiert und infolge dessen von der Steuerung 218 abschaltet. Ist das Gegenlager hingegen in Solllage, kann der Kulissenkörper 80 bis in seine vordere Endlage verschoben werden, wobei der Verriegelungshaken seine hintere Rastposition einnimmt. Der Mitnahmegleiter 114 wird vom Elektromotor 222 weiterhin mit einer Kraft in -X-Richtung beaufschlagt, was zur Folge hat, dass der Riegelstein 156 von einer Schrägfläche 182 in der Aussparung 180 des Mitnahmegleiters 114 in -Y-Richtung in die Aussparung 162 in der Lagerplatte 34 verschoben wird und gleichzeitig der Mitnahmegleiter 114 vom Kulissenkörper 80 freikommt. Der Riegelstein 156 wird durch die von der Druckfeder 160 belastete Kugel 158 in dieser Stellung gehalten, und die automatische Zuziehbewegung der Verschlussvorrichtung 14 wird durch Abschalten des Elektromotors 222 beendet.

Betätigt der Bediener nun die Schaltposition "Schließen" des Betätigungsschalters 224, wird der Elektromotor 222 wieder aktiviert und verschiebt den Mitnahmegleiter 114 weiter nach vorne in die Übergabeposition, wo er mittels einer Koppelfläche 184 an dem Dachspitzengleiter 116 zum Anliegen kommt. Dabei wird über das drucksteife Kabel 174 auf den Dachspitzengleiter 116 eine Kraft nach vorne ausgeübt, die ausreicht, über eine Schrägfläche 186 an einer Vorderseite der Aussparung 172 im Führungsschienenabschnitt 22 den Riegelstein 164 des Dachspitzengleiters 116 in -Z-Richtung aus der Aussparung 172 heraus und in die Aussparung 166 des Mitnahmegleiters 114 hinein zu schieben. Auf diese Weise wird die Kopplung zwischen dem Dachspitzengleiter 116 und dem Führungsschienenabschnitt 22 aufgehoben und eine Kopplung zwischen dem Dachspitzengleiter 116 und dem Mitnahmegleiter 114 aufgebaut. Alternativ zur oben beschriebenen Möglichkeit, die automatische Zuziehbewegung zu beenden, sobald der Kulissenkörper 80 mit Bezug auf die Verschlussvorrichtung 14 mittels des Riegelsteins 156 festgesetzt ist, kann diese auch erst beendet werden, wenn die Kopplung zwischen dem Mitnahmegleiter 114 und dem Dachspitzengleiter 116 aufgebaut ist.

In Fig. 8 ist eine alternative Ausgestaltung einer Verschlussvorrichtung veranschaulicht, welche sich von der in den Fign. 3 bis 7 wiedergegebenen im wesentlichen nur dadurch unterscheidet, dass auf einen Haltehebel entsprechend dem Haltehebel 89 der ersten Ausführungsform verzichtet wird und ein Verriegelungshaken 192 keinen hinteren Arm entsprechend dem hinteren Arm 40 des Verriegelungshakens 36 aufweist. Die federnde Vorspannung des Verriegelungshakens 192 in Richtung auf seine Verriegelungsstellung wird durch eine Zugfeder 196 aufgebracht, die sich zwischen einer Abkantung 194 am Verriegelungshaken 192 und einer Haltenase 198 an der Lagerplatte 34 erstreckt. Ein abgewandelter Steuerhebel 200 weist anstelle des Steuerbolzens 82 des Steuerhebels 84 einen einstückig an dem Steuerhebel 200 angeformten Steuerlappen 202 auf, der mit der Steuerbahn 76 wechselwirkt, um die Schwenkbewegung des Verriegelungshakens 192 zu steuern. Die Abkantung 92 des Steuerhebels 200 liegt, ebenso wie dies beim Steuerhebel 84 der ersten Ausführungsform der Verschlussvorrichtung der Fall ist, im Uhrzeigersinn vorgespannt von unten am Verriegelungshaken 192 an, allerdings wird die Vorspannkraft bei dem zweiten Ausführungsbeispiel gemäß Fig. 8 von der Zugfeder 90 geliefert, die sich, im Unterschied zur ersten Ausführungsform, zwischen der Abkantung 86 am Steuerhebel 200 und der Abkantung 194 am Verriegelungshaken 192 erstreckt.

Wenn der Kulissenkörper 80 sich seiner hinteren Endlage nähert, gelangt der Steuerlappen 202 - ebenso wie der Steuerbolzen 82 der ersten Ausführungsform - vor die Vorderkante der Schwenknocke 210. Da der Verriegelungshaken 192 in seiner Freigabestellung jedoch durch keinen Haltehebel gehalten wird, schwenkt er nun frei in die Verriegelungsstellung. Bei Ankopplung der Verschlussvorrichtung gemäß Fig. 8 an dem karosseriefesten Gegenlager muss daher der sich in Verriegelungsstellung in seiner vorderen Rastposition befindliche Verriegelungshaken 192 zunächst mittels des Bolzens 46 in die Freigabestellung angehoben werden, wozu der Verriegelungshaken 192 an seiner Vorderseite eine Schrägfläche 214 aufweist. Eine Blockierung des Verriegelungshakens 192 in Verriegelungsstellung ist im Gegensatz zur ersten Ausführungsform der Verschlussvorrichtung genauso wenig vorgesehen wie der Mikroschalter 140 zur Abfrage der Schwenkstellung des Verriegelungshakens 192. Statt dessen wird der induktive Sensor 216 eingesetzt, der vom Bolzen 46 des Gegenlagers betätigt wird, wenn der Bolzen 46 sich in einer Position innerhalb der Aufnahmenut 48 befindet, in welcher er von der Verriegelungsnut 42 des sich in der vorderen Rastposition 52 befindlichen Verriegelungshakens 192 arretierbar ist. Ob der Verriegelungshaken 192 tatsächlich in die Verriegelungsstellung zurückgeschwenkt ist, wird durch den induktiven Sensor 216, der anstelle des Mikroschalters 140 als Sensor 228 an der Steuerung 218 angeschlossen ist, nicht detektiert. Sollte dies jedoch nicht der Fall sein, wird die Zuziehbewegung des Verriegelungshakens 192 nicht auf das Gegenlager übertragen, so dass dieses die Solilage nicht erreicht und die Tastspitze 124 der auch in der zweiten Auführungsform der Verschlussvorrichtung vom Prinzip her unverändert übernommenen Gegenlagererkennungseinrichtung nicht bzw. nicht weit genug in X-Richtung betätigt wird. Die Gegenlagererkennungseinrichtung blockiert auf die bereits beschriebene Weise den Kulissenkörper 80 bei Erreichen der Warnposition, woraufhin der Elektromotor 222 ebenfalls blockiert wird. Diesen Zustand erkennt die Steuerung 218 und deaktiviert den Elektromotor 222. Die Situation "Kulissenkörper in Warnposition", die gleichbedeutend mit "Gegenlager nicht in Solllage" ist, wird vorteilhafter Weise dem Bediener angezeigt, so dass dieser über erneute Betätigung der Schaltposition "Öffnen" des Betätigungsschalters 224 die Verschlussvorrichtung wieder vom Gegenlager abkoppelt, um einen neuen Ankopplungsvorgang vorzunehmen.

### Bezugszeichenliste

- 10: Fahrzeug
- 12: Dachkassette
- 14: Verschlussvorrichtung
- 16: Seitenteil
- 18: Heckscheibe
- 20: B-Säule
- 22: Führungsschienenabschnitt
- 24: Ausrichtleiste
- 26: vorderer Führungsschienenabschitt
- 28: Seitenholm
- 30: Faltdach
- 32: Öffnungs- bzw. Schließrichtung
- 34: Lagerplatte
- 36: Verriegelungshaken
- 38: vorderer Arm (von 36)
- 40: hinterer Arm (von 36)
- 42: Verrieglungsnut
- 44: Schwenkrichtung
- 46: Bolzen
- 48: Aufnahmenut
- 50: Verschieberichtung
- 52: vordere Rastposition
- 54: hintere Rastposition
- 56: Lagerstift
- 58: Lagerhebel
- 59: Lagerbügel
- 60: Achse (von 58)
- 62: Buchse (von 58)
- 64, 66: Arm (von 58)
- 68: Steuerstift
- 70: Gleitstein
- 72: Steuerbahn
- 74: Schaltkulisse
- 76: Steuerbahn
- 78: Schaltkulisse
- 80: Kulissenkörper
- 82: Steuerbolzen
- 84: Steuerhebel
- 85: Ausnehmung (von 36)
- 86: Abkantung (von 84 bzw. 200)
- 87: Haltebolzen
- 88: Vorsprung (von 89)
- 89: Haltehebel
- 90: Zugfeder
- 91: Ansatzbolzen
- 92: Abkantung (von 84 bzw. 200)
- 93: erster Arm (von 89)
- 94: zweiter Arm (von 89)
- 95: Schrägfläche
- 97: Vorsprung
- 98: Rastbereich
- 99: Schraube
- 100: Ausrichtplatte
- 101, 102: Gleitbahn
- 104: Trennwand
- 106: Durchbruch
- 108: Anlaufkante
- 109: Steg
- 110, 112: Schenkel
- 111, 113: Kammer
- 114: Mitnahmegleiter
- 116: Dachspitzengleiter
- 118: Kabelkanal
- 119: Oberseite
- 120: Tastgleiter
- 122: Zugfeder
- 124: Tastspitze
- 125: Vorderkante
- 126: Ausrücker
- 128: Ausrückarm
- 130: Sperrhebel
- 131: Achse
- 132: Arm (von 130)
- 133: Sperrnase
- 134, 136: Federarm
- 138: Kombifeder
- 140: Mikroschalter
- 142, 144: Federarm
- 146: Enlagenfeder
- 148: Mikroschalter
- 149: Dachsitze
- 150: Ausrichtfläche
- 152: Ausrichtgabel
- 156: Riegelstein
- 158: Kugel
- 160: Druckfeder
- 162: Aussparung
- 164: Riegelstein
- 166: Aussparung
- 168: Anschlag
- 170: Schrägfläche
- 172: Aussparung
- 174: drucksteifes Kabel
- 176: Koppelfläche
- 178: Schrägfläche
- 180: Aussparung
- 182: Schrägfläche
- 184: Koppelfläche
- 186: Schrägfläche
- 188: Abkantung
- 190: Gleitfläche
- 192: Verriegelungshaken
- 194: Abkantung
- 196: Zugfeder
- 198: Haltenase
- 200: Steuerhebel
- 202: Steuerlappen
- 204, 206: Haltebereich
- 208: Verschiebebereich
- 210: Schwenknocke
- 212: Haltebereich
- 214: Schrägfläche
- 216: induktiver Sensor
- 218: Steuerung
- 220: Hilfskraft-Betätigungsvorrichtung
- 222: Elektromotor
- 224: Betätigungsschalter
- 226, 228: Sensor

## Patentansprüche

1. Verschlussvorrichtung zur lösbaren Festlegung eines Dachteils 12) eines Fahrzeugs (10) an einem karosseriefesten Gegenlager, wobei die Verschlussvorrichtung einen in eine Freigabestellung bringbaren Verriegelungshaken (36, 192) zum Verriegeln des Gegenlagers wenigstens in einer vorderen (52) und einer hinteren (54) Rastposition des Verriegelungshakens (36, 192) sowie einen Sensor (216, 228, 140) umfasst, mittels dem eine von einer Hilfskraft-Betätigungsvorrichtung (220) bewirkbare Zuziehbewegung des Verriegelungshakens (36, 192) in Richtung auf seine hintere Rastposition (54) aktivierbar ist, **dadurch gekennzeichnet, dass** der Verriegelungshaken (36, 192) in seiner vorderen Rastposition (52) von der Freigabestellung in eine Verriegelungsstellung bringbar ist, wobei der Sensor (140, 216, 228) in der vorderen Rastposition (52) des Verriegelungshakens (36, 192) bei verriegeltem Gegenlager betätigbar ist und an ihm ein Aktivierungssignal anliegt, welches in Signalverbindung mit einer Steuerung (218) steht, die ihrerseits die Zuziehbewegung des Verriegelungshakens (36, 192) nach Anliegen des Aktivierungssignals auslöst.

2. Verschlussvorrichtung nach Anspruch 1, **dadurch gekennzeichnet, dass** die Verschlussvorrichtung ferner eine Lagerplatte (34) mit einem Aufnahmeorgan (48) für das Gegenlager umfasst, wobei das Gegenlager mit Bezug auf das Aufnahmeorgan (Aufnahmenut 48) verriegelbar und im wesentlichen linear verschiebbar ist.

3. Verschlussvorrichtung nach Anspruch 2, **dadurch gekennzeichnet, dass** der Verriegelungshaken (36, 192) im wesentlichen in Verschieberichtung (50) des Gegenlagers zwischen der vorderen (52) und der hinteren (54) Rastposition verschiebbar sowie im wesentlichen senkrecht hierzu zwischen der Verriegelungs- und der Freigabestellung schwenkbar ist.

4. Verschlussvorrichtung nach einem der Ansprüche 1 bis 3, **dadurch gekennzeichnet, dass** die Betätigung des Sensors (228, 140) durch Wechselwirkung desselben mit dem in seiner vorderen Rastposition (52) in Verriegelungsstellung befindlichen Verriegelungshaken (36) erfolgt.

5. Verschlussvorrichtung nach Anspruch 4 rückbezogen auf Anspruch 3, **dadurch gekennzeichnet, dass** der Verriegelungshaken (36) über seinen Drehpunkt hinaus verlängert ist und einen hinteren Arm (40) aufweist, der die Betätigung des Sensors (228, 140) bewirkt.

6. Verschlussvorrichtung nach Anspruch 5, **dadurch gekennzeichnet, dass** der hintere Arm (40) des Verriegelungshakens (36) den Sensor (228, 140) mittelbar über einen Federarm (136) einer Feder (138) betätigt, wobei der Sensor (228, 140) und die Feder (138) an der Lagerplatte (34) festgelegt sind.

7. Verschlussvorrichtung nach einem der Ansprüche 1 bis 3, **dadurch gekennzeichnet, dass** die Betätigung des Sensors (216, 228) durch Wechselwirkung desselben mit dem Gegenlager erfolgt, welches in der Verschlussvorrichtung bei in vorderer Rastposition (52) befindlichem Verriegelungshaken (192) von diesem verriegelt ist.

8. Verschlussvorrichtung nach einem der vorhergehenden Ansprüche, **dadurch gekennzeichnet, dass** der Sensor (228) als mechanisch betätigbarer taktiler Sensor (140) ausgebildet ist.

9. Verschlussvorrichtung nach einem der Ansprüche 1 bis 7, **dadurch gekennzeichnet, dass** der Sensor (228) als berührungslos arbeitender Näherungssensor (216) ausgebildet ist.

10. Verschlussvorrichtung nach einem der vorhergehenden Ansprüche, **dadurch gekennzeichnet, dass** der Sensor (228, 140) im wesentlichen in jeder Position des Verriegelungshakens (36) zwischen der vorderen (52) und der hinteren (54) Rastposition betätigbar ist.

11. Verschlussvorrichtung nach einem der vorhergehenden Ansprüche, **gekennzeichnet durch** eine Gegenlagererkennungseinrichtung, mittels der bei Außersolllage des Gegenlagers die Zuziehbewegung des Verriegelungshakens (36, 192) vor Erreichen seiner hinteren Rastposition (54) blockierbar ist.

12. Verschlussvorrichtung nach einem der Ansprüche 3 bis 11, **dadurch gekennzeichnet, dass** die Verschiebebewegung und die Schwenkbewegung des Verriegelungshakens (36, 192) von Schaltkulissen (74, 78) gesteuert werden, die in einem gemeinsamen Kulissenkörper (80) integriert sind, der in einem an der Verschlussvorrichtung festgelegten Führungsschienenabschnitt (22) verschiebbar aufgenommen ist.

13. Verschlussvorrichtung nach Anspruch 12, **dadurch gekennzeichnet, dass** die Hilfskraft-Betätigungsvorrichtung (220) einen Elektromotor (222) umfasst, der die Verschiebung des Kulissenkörpers (80) bewirkt.

14. Verschlussvorrichtung nach Anspruch 12 oder 13, **dadurch gekennzeichnet, dass** es sich bei dem Dachteil um eine Dachkassette (12) handelt, die Teil eines Falt- (30) oder Lamellendaches ist, wobei öffnungsfähige Teile des Falt-(30) oder Lamellendachs in dem Führungsschienenabschnitt (22) der Verschlussvorrichtung aufnehmbar und mit Bezug auf den Führungsschienenabschnitt (22) arretierbar sind.

15. Verschlussvorrichtung nach Anspruch 14, **dadurch gekennzeichnet, dass** der Elektromotor (222) eine Verschiebung eines Dachspitzengleiters (116) bewirkt, der mit einem vorderen Ende des Falt- (30) oder Lamellendachs verbundenen ist und dessen Öffnungs- und Schließbewegung bewirkt, wobei der Dachspitzengleiter (116) in dem Führungsschienenabschnitt (22) aufnehmbar und in einer Halteposition arretierbar ist.

16. Verschlussvorrichtung nach Anspruch 15, **dadurch gekennzeichnet, dass** der Dachspitzengleiter (116) in seiner Halteposition einen Sensor (226, 148) betätigt, der in Signalverbindung mit der Steuerung (218) steht.

## Claims

1. Locking device for the detachable fixing of a roof part (12) of a vehicle (10) to an abutment fixed to the bodywork, the locking device comprising a locking hook (36, 192) which can be brought into a released position for locking the abutment at least in a front (52) and a rear (54) latching position of the locking hook (36, 192), and also a sensor (216, 228, 140), by means of which a closing movement of the locking hook (36, 192) that can be effected by an auxiliary actuating device (220) can be activated in the direction of the rear latching position (54) of the latter, **characterized in that**, in its front latching position (52), the latching hook (36, 192) can be brought from the released position into a locking position, it being possible for the sensor (140, 216, 228) to be activated in the front latching position (52) of the locking hook (36, 192) with the abutment locked and an activation signal being applied to the said sensor, which has a signal connection to a controller (218) which, in turn, triggers the closing movement of the locking hook (36, 192) after the activation signal has been applied.

2. Locking device according to Claim 1, **characterized in that** the closure device further comprises a bearing plate (34) having a holding element (48) for the abutment, it being possible for the abutment to be locked in relation to the holding element (holding groove 48) and to be displaced substantially linearly.

3. Locking device according to Claim 2, **characterized in that** the locking hook (36, 192) can be displaced substantially in the displacement direction (50) of the abutment between the front (52) and the rear (54) latching positions and can be pivoted substantially perpendicular thereto between the locking and the released positions.

4. Locking device according to one of Claims 1 to 3, **characterized in that** the actuation of the sensor (228, 140) is carried out by interaction between the same and the locking hook (36) located in the locking position in its front latching position (52).

5. Locking device according to Claim 4, referring back to Claim 3, **characterized in that** the locking hook (36) is extended beyond its pivot point and has a rear arm (40) which effects the actuation of the sensor (228, 140).

6. Locking device according to Claim 5, **characterized in that** the rear arm (40) of the locking hook (36) actuates the sensor (228, 140) indirectly via a spring arm (136) of a spring (138), the sensor (228, 140) and the spring (138) being fixed to the bearing plate (34).

7. Locking device according to one of Claims 1 to 3, **characterized in that** the actuation of the sensor (216, 228) is carried out by interaction between the same and the abutment which, in the locking device, is locked by the locking hook (192) when the latter is in the front latching position (52).

8. Locking device according to one of the preceding claims, **characterized in that** the sensor (228) is formed as a tactile sensor (140) which can be actuated mechanically.

9. Locking device according to one of Claims 1 to 7, **characterized in that** the sensor (228) is formed as a proximity sensor (216) operating without contact.

10. Locking device according to one of the preceding claims, **characterized in that** the sensor (228, 140) can be actuated substantially in any position of the locking hook (36) between the front (52) and the rear (54) latching positions.

11. Locking device according to one of the preceding claims, **characterized by** an abutment detection device, by means of which, when the abutment is out of its intended position, the closing movement of the locking hook (36, 192) can be blocked before it reaches its rear latching position (54).

12. Locking device according to one of Claims 3 to 11, **characterized in that** the displacement movement and the pivoting movement of the locking hook (36, 192) are controlled by slotted control guides (74, 78) which are integrated in a common slotted guide body (18) which is accommodated such that it can be displaced in a guide rail section (22) fixed to the locking device.

13. Locking device according to Claim 12, **characterized in that** the auxiliary force actuating device (220) comprises an electric motor (222) which effects the displacement of the slotted guide body (80).

14. Locking device according to Claim 12 or 13, **characterized in that** the roof part is a roof cassette (12) which is part of a folding (30) or louvred roof, it being possible for parts of the folding (30) or louvred roof that can be opened to be accommodated in the guide rail section (22) of the locking device and locked in relation to the guide rail section (22).

15. Locking device according to Claim 14, **characterized in that** the electric motor (222) effects a displacement of a roof tip slider (116), which is connected to a front end of the folding (30) or louvred roof and effects the opening and closing movement of the latter, it being possible for the roof tip slider (116) to be accommodated in the guide rail section (22) and locked in a retaining position.

16. Locking device according to Claim 15, **characterized in that**, when it is in its retaining position, the roof tip slider (116) actuates a sensor (226, 148) which has a signal connection to the controller (218).

## Revendications

1. Dispositif de fermeture pour le blocage libérable d'une partie de pavillon (12) d'un véhicule (10) sur une contre-butée faisant corps avec la carrosserie, ledit dispositif de fermeture comprenant un crochet de verrouillage (36, 192) pouvant être amené à une position de dégagement en vue du verrouillage de la contre-butée, au moins dans des positions d'encliquetage antérieure (52) et postérieure (54) dudit crochet de verrouillage (36, 192) ; ainsi qu'un capteur (216, 228, 140) permettant d'activer un mouvement de fermeture par traction du crochet de verrouillage (36, 192) en direction de sa position d'encliquetage (54) postérieure, ledit mouvement pouvant être provoqué par un dispositif (220) d'actionnement par force auxiliaire, **caractérisé par le fait que** le crochet de verrouillage (36, 192) occupant sa position d'encliquetage (52) antérieure peut être amené de la position de dégagement à une position de verrouillage, sachant que le capteur (142, 116, 228) peut être actionné dans la position d'encliquetage (52) du crochet de verrouillage (36, 192), lorsque la contre-butée est verrouillée, et reçoit un signal d'activation en liaison de signalisation avec une commande (218) qui, à son tour, déclenche le mouvement de fermeture par traction du crochet de verrouillage (36, 192) après application dudit signal d'activation.

2. Dispositif de fermeture selon la revendication 1, **caractérisé par le fait que** ledit dispositif de fermeture englobe, par ailleurs, une platine de montage (34) munie d'un organe de réception (48) affecté à la contre-butée, ladite contre-butée étant verrouillable par rapport audit organe de réception (rainure réceptrice 48), et pouvant être animée de coulissements sensiblement linéaires.

3. Dispositif de fermeture selon la revendication 2, **caractérisé par le fait que** le crochet de verrouillage (36, 192) peut être déplacé, pour l'essentiel, dans la direction de coulissement (50) de la contre-butée entre les positions d'encliquetage antérieure (52) et postérieure (54), et peut être animé de pivotements sensiblement perpendiculaires à ladite contre-butée, entre les positions de verrouillage et de dégagement.

4. Dispositif de fermeture selon l'une des revendications 1 à 3, **caractérisé par le fait que** l'actionnement du capteur (228, 140) s'opère par interaction de ce dernier avec le crochet de verrouillage (36) occupant, en position de verrouillage, sa position d'encliquetage (52) antérieure.

5. Dispositif de fermeture selon la revendication 4 rapportée à la revendication 3, **caractérisé par le fait que** le crochet de verrouillage (36) est prolongé au-delà de son point de rotation, et présente un bras postérieur (40) qui provoque l'actionnement du capteur (228, 140).

6. Dispositif de fermeture selon la revendication 5, **caractérisé par le fait que** le bras postérieur (40) du crochet de verrouillage (36) actionne indirectement le capteur (228, 140), par l'intermédiaire d'un bras élastique (136) d'un ressort (138), ledit capteur (228, 140) et ledit ressort (138) étant bloqués à demeure sur la platine de montage (34).

7. Dispositif de fermeture selon l'une des revendications 1 à 3, **caractérisé par le fait que** l'actionnement du capteur (216, 228) s'opère par interaction de ce dernier avec la contre-butée qui est verrouillée dans ledit dispositif de fermeture, par le crochet de verrouillage (192), lorsque celui-ci occupe sa position d'encliquetage (52) antérieure.

8. Dispositif de fermeture selon l'une des revendications précédentes, **caractérisé par le fait que** le capteur (228) est réalisé sous la forme d'un palpeur (140) actionnable mécaniquement.

9. Dispositif de fermeture selon l'une des revendications 1 à 7, **caractérisé par le fait que** le capteur (228) est réalisé sous la forme d'un capteur de proximité (216) fonctionnant sans contact.

10. Dispositif de fermeture selon l'une des revendications précédentes, **caractérisé par le fait que** le capteur (228, 140) est actionnable pour l'essentiel dans toute position du crochet de verrouillage (36), entre les positions d'encliquetage antérieure (52) et postérieure (54).

11. Dispositif de fermeture selon l'une des revendications précédentes, **caractérisé par** un système d'identification de contre-butée au moyen duquel, lorsque la contre-butée occupe une position en dehors de la position de consigne, le mouvement de fermeture par traction du crochet de verrouillage (36, 192) peut être bloqué avant que sa position d'encliquetage (54) postérieure soit atteinte.

12. Dispositif de fermeture selon l'une des revendications 3 à 11, **caractérisé par le fait que** le mouvement coulissant et le mouvement pivotant du crochet de verrouillage (36, 192) sont commandés par des coulisses sélectrices (74, 78) qui sont intégrées dans un corps commun (80) logé, avec faculté de coulissement, dans un tronçon de glissière de guidage (22) assujetti audit dispositif de fermeture.

13. Dispositif de fermeture selon la revendication 12, **caractérisé par le fait que** le dispositif (220) d'actionnement par force auxiliaire englobe un moteur électrique (222) qui provoque le coulissement du corps (80) renfermant les coulisses.

14. Dispositif de fermeture selon la revendication 12 ou 13, **caractérisé par le fait que** la partie de pavillon se présente comme un caisson de pavillon (12) faisant partie intégrante d'un toit repliable (30) ou d'un toit à lattes, sachant que des parties dudit toit repliable (30) ou dudit toit à lattes, qui sont aptes à l'ouverture, peuvent être reçues par le tronçon de glissière de guidage (22) du dispositif de fermeture, et peuvent être arrêtées vis-à-vis dudit tronçon de glissière de guidage (22).

15. Dispositif de fermeture selon la revendication 14, **caractérisé par le fait que** le moteur électrique (222) provoque un coulissement d'un coulisseau d'extrémité (116) du pavillon, qui est relié à une extrémité antérieure du toit repliable (30) ou du toit à lattes, et provoque les mouvements d'ouverture et de fermeture de ce dernier, ledit coulisseau d'extrémité (116) du pavillon pouvant être reçu par le tronçon de glissière de guidage (22), et pouvant être arrêté dans une position de retenue.

16. Dispositif de fermeture selon la revendication 15, **caractérisé par le fait que** le coulisseau d'extrémité (116) du pavillon actionne, dans sa position de retenue, un capteur (226, 148) en liaison par signaux avec la commande (218).
